# EUROPEAN PATENT SPECIFICATION

(11) **EP 1 444 143 B1**
(45) Date of publication and mention of the grant of the patent: **07.05.2008**
(21) Application number: 02776300.2
(22) Date of filing: 25.10.2002
(51) Int. Cl.: B65D 65/14, C09J 7/02, B29C 59/04

(54) **STORAGE WRAP MATERIAL**
UMHÜLLUNGSMATERIAL
MATERIAU D'EMBALLAGE POUR STOCKAGE

(30) Priority: 25.10.2001 US 3900
(43) Date of publication of application: 11.08.2004
(73) Proprietor: THE PROCTER & GAMBLE COMPANY, Cincinnati, Ohio 45202 (US)
(72) Inventor: HAMILTON, Peter, Worthington, Cincinnati, OH 45233 (US); MCGUIRE, Kenneth, Stephen, Wyoming, OH 45215 (US); TOUSSANT, John, William, West Chester, OH 45069 (US); VAUGHN, Jeffrey, Moss, Cincinnati, OH 45252 (US)
(74) Representative: Hampton, Matthew John
(86) International application number: PCT/US2002/034260
(87) International publication number: WO 2003/035502

(56) References cited:
- US-B1- 6 193 918
- US-B1- 6 194 062

## Description

### FIELD OF THE INVENTION

The present invention relates to sheet materials suitable for use in the containment and protection of various items, as well as the preservation of perishable materials such as food items. The present invention further relates to such materials that are suitable for direct contact with such items as a unitary package as well as for use in forming a closure for a semi-enclosed container.

### BACKGROUND OF THE INVENTION

Sheet materials for use in the containment and protection of various items and the preservation of perishable materials such as food items are well known in the art. Such materials can be utilized to wrap items individually and/or can be utilized to form a closure for a semi-enclosed container.

One class of such materials in common use today comprises those of a polymeric composition formed into a thin, conformable web and/or sheet material commonly supplied in rolled form. Common examples of such materials are polyvinyl chloride (PVC), polyvinylidene chloride (PVDC), and polyethylene (PE) sheet materials. These materials exhibit a clinging character on at least one surface due to the properties of the polymeric materials they are formed from and/or additives such as plasticizers, tackifiers, etc., such that they may be folded or wrapped around an item such that they cling to the item and/or to themselves. The clinging character of such materials also permits their use in combination with semi-enclosed rigid, semi-rigid, or flexible containers to provide a fully enclosed container structure. The barrier properties of many such materials, particularly their oxygen, moisture/moisture vapor, and odor barrier properties, provide the desired preservation characteristics for perishable items such as food items and/or items which oxidize or otherwise degrade more rapidly with continued exposure to environmental conditions.

While these materials have achieved a certain level of acceptance, where the material is supplied in the form of a continuous roll in a dispensing carton or apparatus, difficulty is often encountered locating and isolating the current end portion of the rolled material in order to start the dispensing operation. In order to address this issue, a number of methods of identifying and/or isolating the current end of the rolled material have been developed (tabs, colors, end-grasping dispenser features, etc.) which have achieved varying levels of success. Irregardless of the issue of handling the end of the rolled material, the tendency of the material to cling to itself also increases the dispensing force required to unroll the material and tangentially separate the dispensed portion and, if excessive, can lead to a phenomenon known as "roll blocking" wherein the dispensing force to unroll becomes excessive. Roll blocking can also cause excessive dispensing forces which can lead to longitudinal tearing of the material in the roll direction, leading the user to dispense a narrower, unevenly-torn portion of the rolled material. In addition, users frequently encounter situations wherein the material clings to itself prematurely (i.e., before contacting the desired bonding surface), thus necessitating either the manual disengagement of the clinging portion(s) and/or discarding of the material in favor of a new portion.

Another difficulty that may be encountered is the failure of the material to adhere to itself and/or the desired target surface sufficiently to form an airtight seal either from the outset or after a period of handling of the container or wrapped item. If such materials cannot form a seal with barrier properties at least as great as those of the material itself, the full potential of such materials in use as a storage wrap cannot be realized as the seal becomes the weakest link in terms of containerization. Accordingly, some users employ additional securement features such as rubber bands, tapes, etc. Wrinkles in the material where it clings to itself or a target surface can leave small channels in the region between the material and the opposing surface, thereby causing a failure to achieve the desired seal quality for preservation of perishable items. Some users attempt to address seal quality shortcomings by double- or triple-wrapping the desired item to form a tortuous labyrinth seal path of increased length.

Also, because the materials "cling" to themselves and other surfaces, i.e., exhibit an attraction or affinity for the material rather than an adhesive bond, their affinity for a complementary surface is highly dependent upon material characteristics such as chemical composition, electrical conductivity, surface energy, surface finish, etc. Therefore, such materials leave room for improvement both in ease of use as well as ability to form an adequate seal for preservation of perishable items. In many instances, the plasticizers, tackifiers, and other cling additives utilized to provide the cling properties of such materials may also introduce undesirable attributes such as odor to the finished material and/or may introduce environmental concerns.

Another class of materials in common use today comprises thin, conformable webs of various compositions commonly supplied in individual sheet or rolled form. Common examples of such materials include aluminum foil, coated (waxed, etc.) paper, etc. These materials exhibit no adhesive or cling character on either surface, instead relying upon the dead-fold characteristics of the materials they are formed from such that they may be folded or wrapped around an item and retain their folded or wrapped shape. The ability of these materials to maintain their folded or creased shape also permits their use in combination with semi-enclosed rigid, semi-rigid, or flexible containers to provide a fully enclosed container structure. The barrier properties of many such materials, particularly their oxygen, moisture/moisture vapor, and odor barrier properties, provide the desired preservation characteristics for perishable items such as food items and/or items which oxidize or otherwise degrade more rapidly with continued exposure to environmental conditions.

While these materials have achieved a certain level of acceptance, users frequently encounter situations wherein the material fails to remain sufficiently folded and engaged with itself and/or a semi-enclosed container to adequately enclose and preserve the item (i.e., the folds tend to unfold with time or mechanical disturbance), thus necessitating either refolding and external securement of the folded portion(s) and/or discarding of the material in favor of a new portion and re-accomplishing the wrapping process. In some instances, such materials may also be constructed of very thin materials in order to achieve the desired degree of conformability. This may result in the material having insufficient tensile properties to dispense from a roll without longitudinal tearing of the material in the roll direction, leading the user to dispense a narrower, unevenly torn portion of the rolled material.

Another difficulty that may be encountered is the failure of the material to form an adequate seal where folded either from the outset or after a period of handling of the container or wrapped item. If such materials cannot form a seal with barrier properties at least as great as those of the material itself, the full potential of such materials in use as a storage wrap cannot be realized as the seal becomes the weakest link in terms of containerization. Accordingly, some users undertake to employ additional securement features such as rubber bands, tapes, etc. Wrinkles in the material where it meets itself or a target surface can leave small channels in the region between the material and the opposing surface, thereby causing a failure to achieve the desired seal quality for preservation of perishable items. Some users attempt to address seal quality shortcomings by double- or triple-wrapping the desired item to form a tortuous labyrinth seal path of increased length.

The effective fold radius of these materials is also a factor in determining their suitability for forming an effective seal, as the fold radius of some materials (paper based, etc.) is determined by such material properties as fiber length. A fold radius that is too large will generally render such a material unsuitable for forming an effective seal. In addition, due to the fact that most such dead-fold type materials are opaque, the condition and/or type of items contained in such a packaging system are also obscured from view, necessitating un-wrapping and re-wrapping the items to permit inspection.

Such materials, due to their lack of any adhesive properties, are also difficult to effectively employ in the preservation of perishable items in combination with a semi-enclosed container where the container provides no physical or mechanical engagement features (such as a conventional bowl) around which to fold the material to effect a mechanical labyrinth-type seal between the material and the container. Therefore, such materials leave room for improvement both in ease of use as well as ability to form an adequate seal for preservation of perishable items.

Improved storage wrap materials comprising a layer of adhesive and protected from inadvertent contact have been developed and are described in detail in U. S. Patent No. 6,194, 062, issued February 27,2001 to Hamilton and McGuire, entitled "Storage Wrap Material", incorporated herein by reference. These storage wrap materials have proven very suitable for solving many of the sealing difficulties explained in detail above. The present invention provides for further improvements thereof.

### SUMMARY OF THE INVENTION

The present invention is directed to storage wrap materials comprising a sheet material having a first active side and a second side. The first active side comprises a plurality of three-dimensional non-adherent protrusions extending outwardly from surrounding depressions and an adhesive composition coating on at least a portion of the depressions. Additionally, the adhesive composition coating has a thickness less than the height of the non-adherent protrusions and from about 0.00001 (0.00025 mm) to about 0.0002 inches (0.0051mm) in thickness, and covers less than 75% of the first active side of the sheet material.

In another embodiment, the present invention is directed to a process for producing a storage wrap material characterized in that it comprises the steps of:
(a) providing a first embossing roll having a first embossing pattern disposed thereon, wherein the first embossing roll is engaged with a second embossing roll, the second embossing roll having a second embossing pattern disposed thereon, the first embossing pattern and the second embossing pattern being complimentary;
(b) applying an adhesive composition to the first embossing roll;
(c) contacting a sheet material having a first active side and a second side with the first embossing roll after step (b), wherein the adhesive composition forms an adhesive composition coating on the sheet material in register with the first embossing pattern of the first embossing roll; and
(d) passing the sheet material between the first embossing roll and the second embossing roll wherein the first embossing roll and the second embossing roll emboss the sheet material with the complimentary embossing pattern; and
(e) removing the sheet material from the embossing rolls;
wherein the adhesive composition coating has a thickness of from about 0.00001 (0.00025 mm) to about 0.0002 inches (0.0051mm) in thickness and covers less than 75% of the first active side of the sheet material.

In yet another embodiment, the present invention is directed to a process for producing a storage wrap material characterized in that it comprises:
(a) providing a first embossing roll with a first embossing pattern having lands and recesses disposed thereon, wherein the first embossing roll is engaged with a second embossing roll, the second embossing roll having a second embossing pattern disposed thereon, the first embossing pattern and the second embossing pattern being complimentary;
(b) passing a sheet material between the engagement of the first embossing roll and the second embossing roll wherein the first embossing roll and the second embossing roll emboss the sheet material with the complimentary embossing pattern; and
(c) applying an adhesive composition to the sheet material after step (b);
wherein the adhesive composition is present on the sheet material at a level of from about 0.00001 (0.00025mm) to about 0.0002 inches (0.0051 mm) in thickness, and covers less than 75% of the first active side of the sheet material.

The storage wrap materials may be activated by different approaches, but in an exemplary embodiment the first active side is activatible by an externally applied force exerted upon the sheet material. The force may be an externally applied compressive force exerted in a direction substantially normal to the sheet material or may be an externally applied tensile force exerted in a direction substantially parallel to the sheet material.

The inventors of the present invention have unexpectedly discovered that benefits may be found upon reducing the amount of adhesive composition incorporated within the manufacture of such storage wrap materials, particularly wherein the adhesive composition is a pressure-sensitive adhesive composition. More particularly, it has been discovered that the amount of adhesive composition present within the storage wraps can be significantly reduced without losing any in-use performance. Additionally, it has been further determined that despite the reduction in the amount of adhesive composition employed in the storage wraps, the manufacturing process continues to operate efficiently and smoothly and the finished product unwinds more easily and with less applied force when packaged in a roll form. Furthermore, improved process operations that require less adhesive cleanup from machine processing parts, especially the female embossing roll, can be employed.

These and additional objects, advantages and novel features of the present invention will become apparent to those skilled in the art from the following detailed description, which is simply, by way of illustration, various modes contemplated for carrying out the invention. As will be realized, the invention is capable of other different obvious aspects all without departing from the invention. Accordingly, the drawings and specification are illustrative in nature and not restrictive.

### BRIEF DESCRIPTION OF THE DRAWINGS

While the specification concludes with claims particularly pointing out and distinctly claiming the present invention, it is believed that the same will be further understood from the following description taken in conjunction with the accompanying drawings in which:
Figure 1 is a perspective view of the storage wrap material of the present invention provided in roll form;
Figure 2 is a plan view of an exemplary embodiment of a three-dimensional, nesting-resistant sheet material suitable for use as a storage wrap material in accordance with the present invention;
Figure 3 is a partial elevational sectional view of the sheet material of Figure 2, wherein an adhesive composition is included within the three-dimensional structure of the web;
Figure 4 is a plan view of a three-dimensional forming structure suitable for forming a three-dimensional, nesting resistant sheet material such as that of Figure 3;
Figure 5 is a partial elevational sectional view of the three-dimensional forming structure of Figure 4;
Figure 6 is a schematic illustration of an embossing and adhesive printing process and apparatus according to the present invention;
Figure 7 is a schematic illustration of a representative apparatus suitable for forming a storage wrap material in accordance with the present invention;
Figure 8 is a perspective view of the storage wrap material of the present invention being formed into a unitary package around an item to be stored by bonding the material to itself around the item;
Figure 9 is a perspective view of the storage wrap material of the present invention being utilized in combination with a semi-enclosed container to form a closed container; and
Figure 10 is a perspective view of the storage wrap material of the present invention being formed into a unitary package around an item to be stored by bonding overlying portions of the material to itself over the item.

### DETAILED DESCRIPTION OF THE INVENTION

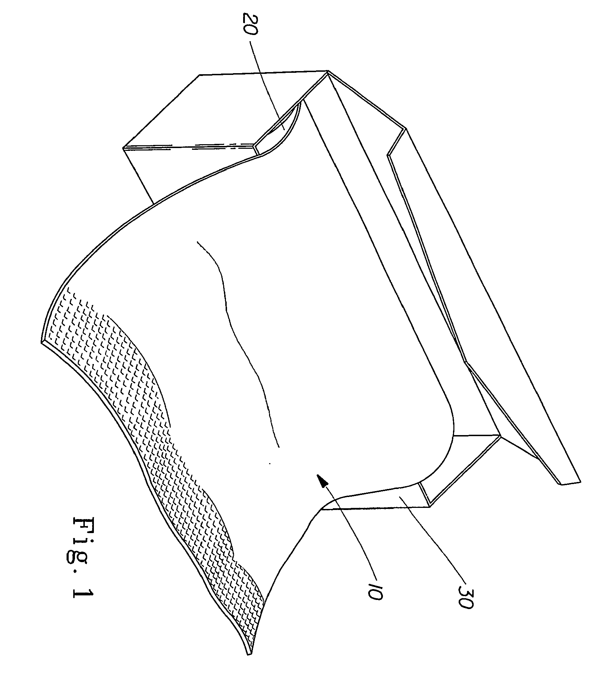

Figure 1 depicts an exemplary embodiment of a storage wrap material 10 according to the present invention. As shown in Figure 1, storage wrap material 10 is provided in the form of a web of flexible sheet material which can be wound upon a core to form a roll 20 which is suitable for use in a dispenser or holder such as carton 30. In accordance with the present invention, storage wrap material 10 exhibits minimal, and preferably no, adhesive or cling properties until activated by a user. This characteristic permits storage wrap 10 to be stored and dispensed in any desired mode without encountering the difficulties of premature clinging or adhering to itself, and without the need for separate release sheets, liners, spacers, or the like. At the same time, when activated at the desired location and at the desired time, the storage wrap material exhibits sufficient adhesive properties to form a bond to most common materials that is sufficiently strong so as to survive handling without failure. The bond between the storage wrap material and a target surface is also sufficient to provide a barrier seal against transmission of oxygen, moisture/moisture vapor, odor, etc. such that perishable items may be satisfactorily enclosed and preserved to the extent of the barrier properties of the material itself.

Although storage wrap materials according to the present invention may be provided with two active sides or surfaces, it is presently preferred that the storage wrap materials have only one active side and one inactive or inert side.

A first active side of the storage wrap material may be selectively activated by a user to provide activated regions where desired to provide selective adhesion of the material to a target surface. The target surface may comprise a separate surface or material, such as a container or an item or items to be wrapped, or may comprise another portion of the storage wrap material itself. Selective activation results in the generation of only so much active area with adhesive properties as is needed, i.e., all remaining portions of the storage wrap material remain inactive or inert. The storage wrap material is therefore capable of forming discrete inactive and active regions on the same side of the material in addition to the ability to have an active side and an inactive side.

As is used herein, "adhesive composition" generally refers to any material and/or substance capable of being held in the open valleys and/or depressions associated with the storage wrap materials of the present invention. Those skilled in the art will appreciate that the adhesive compositions may exist in various forms, such as flowable substances which are substantially non-flowing prior to delivery to a target surface, or alternatively as substances which do not flow at all, such as a fibrous or other interlocking materials. Furthermore, the adhesive compositions of the present invention may exist in either a fluid or solid state. Adhesives, electrostatics, mechanical interlocking, capillary attraction, surface adsorption, and friction, for example, may also be used to hold the adhesive compositions in the valleys and/or depressions. The adhesive compositions may be permanently held in the valleys and/or depressions, or they may be intended to be released therefrom when exposed to contact with external surfaces or when the three dimensional structure is deformed, heated, or otherwise activated. Suitable adhesive compositions include substances such as gels, pastes, foams, powders, agglomerated particles, prills, microencapsulated liquids, waxes, suspensions, liquids, and combinations thereof.

In a specific embodiment, the first active side of the storage wrap material is adapted to exhibit an adhesion peel force of at least about 1 ounce per linear inch width (0.012 kg/cm), more preferably between about 1 to about 2.5 ounces per linear inch width (0.012 to about 0.027 kg/cm), after activation by a user. In accordance with the present invention, the use of an adhesive composition on the surface of the material provides an adhesion peel force after activation by a user which is greater than an adhesion peel force exhibited prior to activation by a user and which is sufficient to form a barrier seal against a target surface at least as great as those of the storage wrap material and the target surface such that perishable items, such as food items, may be effectively preserved. Furthermore, according to this embodiment, the first active side of the storage wrap material is adapted to be selectively activated in discrete regions by a user to provide adhesive properties where and when desired.

In another embodiment, the storage wrap materials of the present invention comprise a sheet of non-porous substantially translucent polymeric film material having a first active side and a second side. The first active side is activatible by an externally applied compressive force exerted in a direction substantially normal to the sheet material and is adapted to exhibit an adhesion peel force after activation by a user which is greater than an adhesion peel force exhibited prior to activation by a user and which is sufficient to adhere to a target surface. Furthermore, a compressive force of at least about 0.1 psi (0.69 kPa) is required to activate the first active side. The sheet material is linerless, such that activation of the first active side requires no removal of components of the sheet material. Furthermore, the sheet material is sufficiently flexible to conform readily to a desired surface and has sufficiently small resiliency that it does not exert undue restorative forces which would tend to cause the sheet material to break contact with such a desired surface.

In other exemplary embodiments according to the present invention, the storage wrap material is a deformable material. The term "deformable material" is intended to include foils, polymer sheets and/or films, cloth, wovens or nonwovens, paper, cellulose fiber sheets, co-extrusions, laminates, and combinations thereof. The properties of a selected deformable material can include, though are not restricted to, combinations or degrees of being: porous, non-porous, microporous, gas or liquid permeable, non-permeable, hydrophilic, hydrophobic, hydroscopic, oleophilic, oleophobic, high critical surface tension, low critical surface tension, surface pre-textured, elastically yieldable, plastically yieldable, electrically conductive, and electrically nonconductive. Exemplary materials include wood, metal, rigid polymer stock, ceramic, glass, cured resin, thermoset materials, cross-linked materials, rubber, frozen liquids, concrete, cement, stone, man-made materials, etc. Such materials can be homogeneous or composition combinations.

The storage wrap materials of the present invention may be utilized to enclose and protect a wide variety of items by various methods of application, including direct application to the desired item, enclosure of the desired item and securement to itself, and/or in combination with a semi-enclosed container. Such storage wrap materials may be advantageously employed in a container system comprising, in combination, the storage wrap material and a semi-enclosed container with at least one opening surrounded by a peripheral edge. The storage wrap material is adhered to the peripheral edge over the opening following activation by a user to convert the semi-enclosed container to a closed container.

Various means of activation are envisioned as being within the scope of the present invention, such as compression, extension, thermal activation, etc. However, in terms of providing the user with the desired degree of control over the activation process the compression activation method is presently preferred.

Regardless of the manner of activation, storage wrap materials of the present invention will exhibit an adhesive, adherent, or tacking character as opposed to merely a clinging or affinity character. Accordingly, such storage wrap materials will form a bond or seal when in contact with itself or another target surface as opposed to merely being attracted to such surface. While a number of approaches such as the use of selectively adherent materials may be utilized to provide the desired adhesive properties, a presently preferred approach is to utilize an adhesive composition such as a pressure-sensitive adhesive. When designing storage wrap materials in accordance with the present invention, it may be desirable to tailor the particular choice of adhesive composition so as to provide either a permanent bond or a releasable bond as desired for a particular application. Where a permanent bond is desired, opening of the wrap or enclosed container for access to the item(s) therein requires destruction of the storage wrap and/or the container. Releasable bonds, on the other hand, provide access to the wrapped item(s) by permitting separation of the wrap from itself or the container at the bond site without destruction. Moreover, depending upon the activation mechanism employed in the design of the storage wrap material, the releasable bond may additionally be refastenable if sufficient adhesive character remains after the initial activation/bonding/release cycle.

The degree of adhesion that they exhibit after activation by a user is another important property in designing storage wrap materials in accordance with the present invention. More particularly, the storage wrap materials of the present invention exhibit an adhesion sufficient to survive the likely degree of handling the wrapped item or enclosed container is likely to encounter in use while maintaining the desired level of sealing engagement with the item, with itself, or with the accompanying semi-enclosed container such that preservation of perishable items is ensured.

One way to measure or quantify this adhesion property is in terms of an adhesion peel force value that is preferably measured by Pressure Sensitive Tape Council Method PSTC-1. According to this method, a 12-inch (30.5 cm) by 1-inch (2.5 cm) strip of film is rolled once against a smooth stainless steel surface at a rate of 12 inches (30.5 cm) per minute using a 4.5 pound (2.04 kg) roller and then tested as having a peak adhesion peel force value ranging from about 1 to about 50 ounces/inch (0.012 to 0.600 kg/cm), more preferably from about 1 to about 2.5 ounces/inch (0.012 to 0.027 kg/cm) of strip width. In general, minimum adhesion that maintains a seal is desired for a storage wrap, so that the wrap is easily peeled open for access to the stored item(s).

In a specific embodiment, the storage wrap material of the present invention is a substantially clingless wrap sheet material in contrast to typical commercially available storage wrap materials. As discussed above, such materials exhibit "cling" properties on a constant basis, such that they cling to themselves and to other surfaces whenever brought into proximity with them, whether desirable or not. Such materials often incorporate resins, additives, tackifiers, or other materials to achieve the target level of cling. Suitable methods of measuring and quantifying this cling property are described in ASTM test methods D5458-95 and D3354-89. Test method D5458-95 is useful for measuring cling between two layers of film in both stretched and unstretched conditions, and utilizes a 1 inch (2.54 cm) wide film strip adhered to a flat film attached to an inclined surface. The force required to remove the strip of film from the flat film is measured. Test method D3354-89 is useful for measuring the degree of blocking (unwanted adhesion) existing between overlapping layers of plastic film. Film-to-film adhesion is expressed as a blocking load in grams that will cause two layers of polyethylene film to separate with an area of contact of 100 square centimeters.

The storage wrap materials of the present invention may take many forms and may be manufactured by a variety of different approaches. One design category that can provide the required properties incorporates the use of standoffs to prevent an adhesive composition layer from making contact with external surfaces before intended to do so. Through user activation, the standoffs are designed to be deformable, removable, repositionable, or frangible in order to expose the adhesive composition, when intended, to the target surface. One particular approach within that design category which is preferred is to form a three-dimensional polymeric film material with a layer of a pressure-sensitive adhesive composition protected from contact with other surfaces by integrally-formed deformable protrusions or stand-offs. To activate the material, once the material is positioned over the desired target surface (which may be another portion of itself), the user exerts a pressure on the desired location of the material to collapse the protrusions and bring the adhesive composition into engagement with the target surface to form the desired bond. Such materials are described in greater detail in U.S. Pat. No. 5,662,758, issued September 2, 1997 to Hamilton et al, entitled "Composite Material Releasably Sealable to a Target Surface when Pressed thereagainst and Method of Making", incorporated herein by reference.

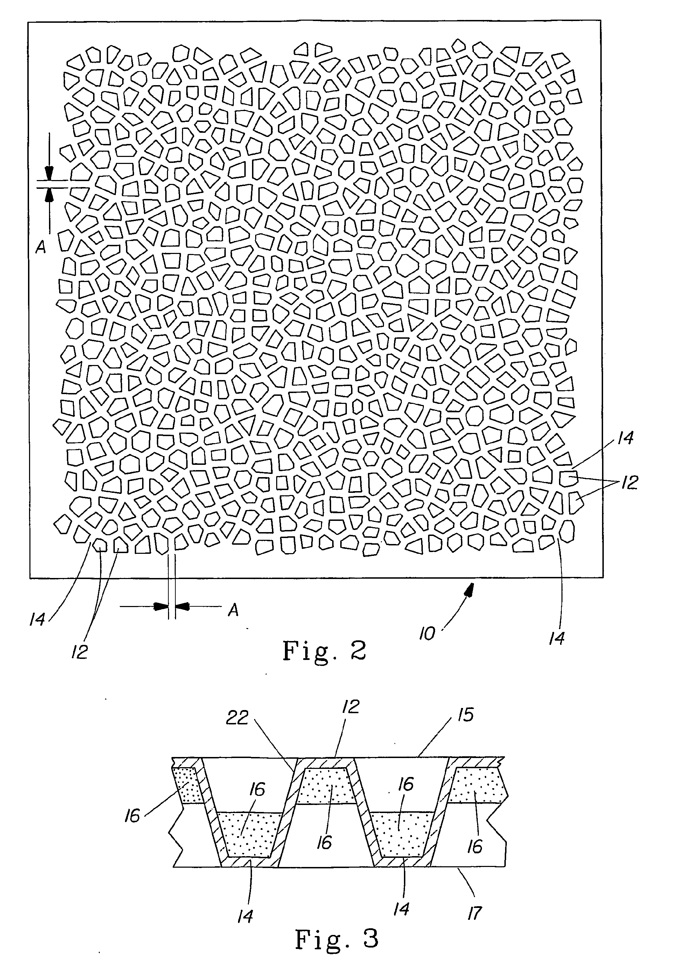

Figures 2-3 illustrate a typical storage wrap material 10 constructed in accordance with the aforementioned Hamilton et al reference which is suitable for use as a storage wrap material of the present invention. In an exemplary embodiment, the three-dimensional protrusions depicted in Figures 2-3 may be formed in an amorphous pattern of two-dimensional geometrical shapes such that the sheet material resists nesting of superimposed layers such as would be encountered in a roll of product. Such three-dimensional, nesting-resistant sheet materials and patterns are described in greater detail in U.S. Pat. No. 5,965,235, issued October 12, 1999 to McGuire et al., entitled "Three-Dimensional, Amorphous-Patterned, Nesting-Resistant Sheet Materials and Method and Apparatus for Making Same" incorporated herein by reference.

The plan view of Figure 2 illustrates a representative three-dimensional, nesting-resistant sheet material suitable for use as a storage wrap material of the present invention, which is generally indicated as 10. Figure 2 represents an amorphous two-dimensional pattern generated by methods as described above and utilizing a constraint factor of 0.75. Material 10 has a plurality of non-uniformly shaped and sized, preferably hollow, protrusions 12, surrounded by spaces or depressions/valleys 14 therebetween, which are preferably interconnected to form a continuous network of spaces within the amorphous pattern. Figure 2 also shows a dimension A, which represents the width of spaces 14, measured as the substantially perpendicular distance between adjacent, substantially parallel walls at the base of the protrusions. In an exemplary embodiment, the width of spaces 14 is preferably substantially constant throughout the pattern of protrusions.

The protrusions 12 are preferably spaced center to center an average distance of approximately two protrusion base diameters or closer, in order to minimize the volume of valleys between protrusions and hence the amount of adhesive composition located between them. For applications where it is intended that the protrusions be deformable, the protrusions 12 preferably have heights which are less than their diameters, so that when they deform, they deform by substantially inverting and/or crushing along an axis which is substantially perpendicular to a plane of the material. This protrusion shape and mode of deforming discourages protrusions 12 from folding over in a direction parallel to a plane of the material so that the protrusions cannot block an adhesive composition present or coated within the depression and/or valley between them from contact with a target surface.

Figure 3 depicts a fragmentary elevational cross-section of a storage wrap material 10 taken at a location where a complete protrusion 12 and both adjoining spaces or depressions/valleys 14 can be seen in cross-section. In this view, the upper surface of the material which faces the viewer of Figure 2, and which includes the projecting portions of the protrusions 12, is identified with the numeral 15, and is referred to hereafter as the male side of the material. Correspondingly, the lower surface of the material facing away from the viewer of Figure 2, which includes the openings of the hollow depression portions of the protrusions 12, is identified with the numeral 17, and is referred to hereafter as the female side of the material.

Figure 3 shows an adhesive composition 16 added to spaces 14, as well as to the hollow underside of the protrusions 12, in accordance with the teachings of U.S. Patent No. 5,871,607, issued February 16, 1999 to Hamilton et al., entitled "Material Having a Substance Protected by Deformable Standoffs and Method of Making" incorporated herein by reference. The adhesive composition 16 coats at least a portion of the spaces or depressions/valleys 14 so that an outer surface of protrusions 12 remain external to the surface level of the adhesive composition 16 such that the protrusions prevent the adhesive composition 16 on the male side of the material from making contact with external surfaces. With regard to the male side of the material, the adhesive composition 16 coats at least a portion of the hollow depression protrusions such that the reverse side of the spaces or depressions/valleys between respective protrusions serves an analogous function in preventing the adhesive composition 16 within the protrusions from making contact with external surfaces. Adhesive compositions located within different sides of the material 10 and/or within different geometrically-distinct zones within a side of the material 10 need not be the same composition and could in fact be distinctly different compositions serving distinctly different functions.

The spaces or depressions/valleys in the three-dimensional structure of the present invention are normally open; therefore it is desirable to have the adhesive compositions stay in place and not run out of the structure without an activation step. The activation step of the present invention is preferably deformation of the three-dimensional structure by compression. However, an activation step to cause the compositions to flow could be heating the material to above room temperature or cooling it below room temperature. Or it could include providing forces excessive of the earth's gravity. It could also include other deforming forces, such as tensile forces and combinations of these activation phenomena.

In a particularly preferred embodiment, protrusions 12 have an average base diameter of about 0.015 inches (0.038 cm) to about 0.030 inches (0.076 cm), and more preferably about 0.025 inches (0.064 cm). They also have an average center-to-center spacing of from 0.03 inches (0.08 cm) to 0.06 inches (0.15 cm), and more preferably about 0.05 inches (0.13 cm) spacing. This results in a high number density of protrusions. The more protrusions per unit area, the thinner the piece of material and protrusion walls can be in order to resist a given deformation force. In a preferred embodiment the number of protrusions per square inch exceeds 200 and the protrusions occupy from about 25% to about 75% of the protrusion side of the piece of material. They have a protrusion height of about 0.004 inches (0.010 cm) to 0.012 inches (0.030 cm), and more preferably about 0.006 inches (0.015 cm) height. The preferred material is 0.0003 inch (0.0076 mm) nominal thickness high density polyethylene (HDPE).

For fabrication of the storage wrap materials of the present invention, it is preferred that a layer of an adhesive composition 16 is coated on at least a portion of the depressions of the sheet material. In an exemplary embodiment according to the present invention, the adhesive composition is a latex pressure-sensitive adhesive composition. According to this embodiment, the adhesive composition coating has a thickness less than the height of the non-adherent protrusions and from about 0.00001 (0.00025 mm) to about 0.0002 inches (0.0051 mm) in thickness. More preferably, the adhesive composition coating has a thickness of from about 0.00003 (0.00076 mm) to about 0.00015 inches (0.0038 mm). Furthermore, in one embodiment the overall weight of the adhesive composition coating present per unit area of the sheet material according to the present invention is from about 0.1 to about 2 grams per square meter (g/m²). In more specific embodiments, the coating is present in amounts of from about 0.3 to about 1.5 g/m². In further embodiments, the overall coverage area of the adhesive composition coating present on the storage wrap sheet materials of the present invention is preferably less than 75% of the first active side of the sheet material, or more specifically less than 55%.

In a specific embodiment, the adhesive composition 16 comprises a layer of hot melt adhesive, such as specification no. Fuller HL-2115X, made by H. B. Fuller Co. of Vadnais Heights, MN. One skilled in the art will appreciate, however, that any adhesive composition that suits the needs of the material application can be utilized according to the present invention. Suitable adhesive compositions may be refastenable, releasable, permanent, temporary, semi-permanent or otherwise. Furthermore, the size and spacing of protrusions is preferably selected to provide a continuous adhesive composition path surrounding protrusions so that airtight seals may be made with a target surface.

Storage wrap materials according to the present invention may be made from homogeneous resins or blends thereof. Single or multiple layers within the sheet material are contemplated, whether co-extruded, extrusion-coated, laminated or combined by other known means. The key attribute of the sheet material is that it be formable to produce protrusions and valleys. Useful resins include polyethylene, polypropylene, PET, PVC, PVDC, latex structures, nylon, etc. Polyolefins are generally preferred due to their lower cost and ease of forming. Preferred material gauges are about 0.0001 inches (0.0025 mm) to about 0.010 inches (0.25 mm). More preferred gauges are from about 0.0002 inches (0.005 mm) to about 0.002 inches (0.051 mm). Even more preferred gauges are from about 0.0003 inches (0.0076 mm) to about 0.001 inches (0.025 mm).

Providing a modulus of elasticity sufficiently high to minimize material stretching during use is beneficial for sealing the storage wrap material 10 to a target surface. Stretched materials result in residual forces parallel to the plane of adhesive contact, which may cause a weak adhesive bond to break. The larger and more closely spaced the protrusions, the greater the likelihood of stretching to occur in a given material. Although elasticity in the storage wrap material 10 is believed to be undesirable for use as a container wrap that seals to a container, there are potentially many other uses for an elastic material containing a pattern of an adhesive composition. Reducing the protrusion spacing to the closest possible spacing that is manufacturable may increase material stretch, but it may be beneficial in reducing the volume of the adhesive composition between protrusions. Different applications for the material of the present invention will dictate ideal size and density of protrusions, as well as the selection of the adhesive composition used therewith.

The material property "beam strength" of a three-dimensional sheet material is an important factor to consider when selecting the material type and thickness, as well as the density and pattern of protrusions. It has been observed that, in general, larger numbers of smaller protrusions provide a greater level of beam strength for a given material type and thickness than a smaller number of larger protrusions. Said differently, thinner and more conformable materials may be utilized and still realize the non-nesting advantages of the present invention through the use of an amorphous pattern having generally comparatively small, comparatively high number density protrusions.

It is believed that the protrusion size, shape and spacing, the sheet material properties such as flexural modulus, material stiffness, material thickness, hardness, deflection temperature as well as the forming process determine the strength of the protrusion. The forming process is important in sheet materials such as polymeric films, for example, since "cold forming" or embossing generates residual stresses and different wall thickness distributions than that produced by thermoforming at elevated temperatures. For some applications it is desirable to provide a stiffness (deformation resistance) which is sufficient to withstand a pressure of at least 0.1 pounds per square inch (0.69 kPa) without substantially deforming protrusions to where the adhesive composition contacts an external surface. An example of this requirement would be the need to wind the material onto a roll for transport and/or dispensing. Even with very low in-wound pressures of 0.1 pounds per square inch (0.69 kPa), a residual in-wound pressure in the interior of the roll may deform protrusions in the material sufficiently to bring the overlaying layers into contact with the adhesive composition.

The protrusions 12 have sidewalls 22, which become thinned when the protrusions 12 are formed, to help ensure that the protrusions 12 deform as intended. High density polyethylene is preferred over low density polyethylene because the former can be made thinner for the same protrusion deform strength and because once deformed, HDPE protrusions do not tend to rebound toward their undeformed initial configuration as do the LDPE protrusions.

The protrusions 12 preferably have a convex polygonal base shape, the formation of which is described hereinafter. By convex polygonal shape, it is meant that the bases of the protrusions have multiple (three or more) linear sides, which form no externally measured angle of less than 180° with any adjacent side. Of course, alternative base shapes are equally useful. However, the preferred base shape is believed to be most easily generated. Polygons preferably interlock in the plane of the lower or female surface 17, as in a tessellation, to provide constant width spacing between them. The width A of the spaces 14 may be selected depending upon the volume of the adhesive composition desired between protrusions. Preferably the width A is always less than the minimum protrusion dimension of any of a plurality of protrusions 12. In one embodiment, the area occupied by plurality of protrusions 12 is from about 30% to about 70%, more specifically about 50%, of the available surface area of the storage wrap material 10.

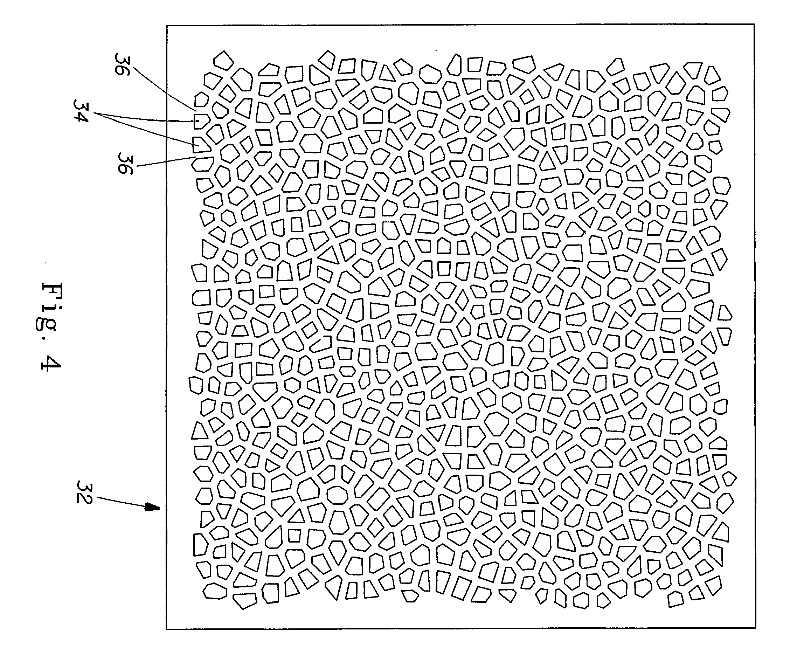

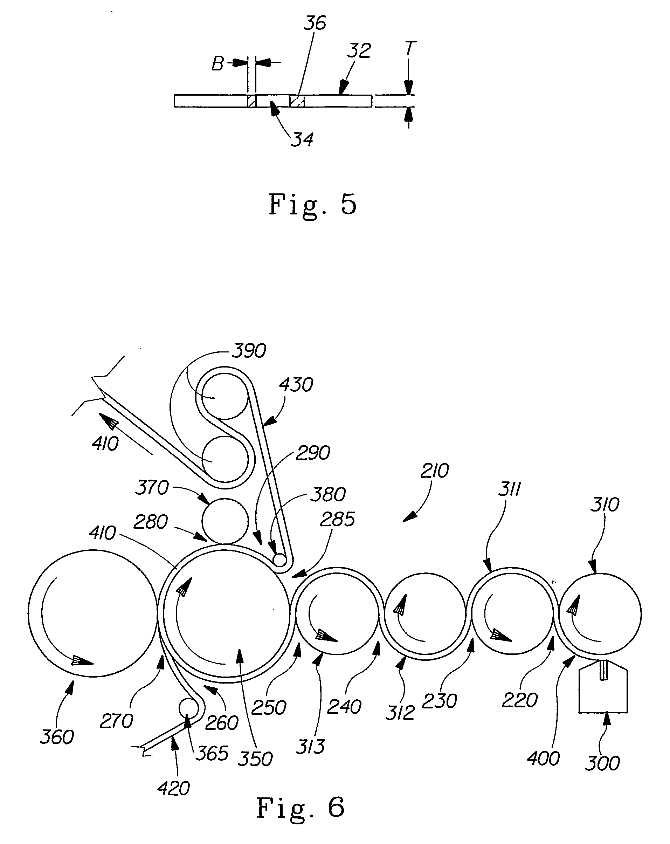

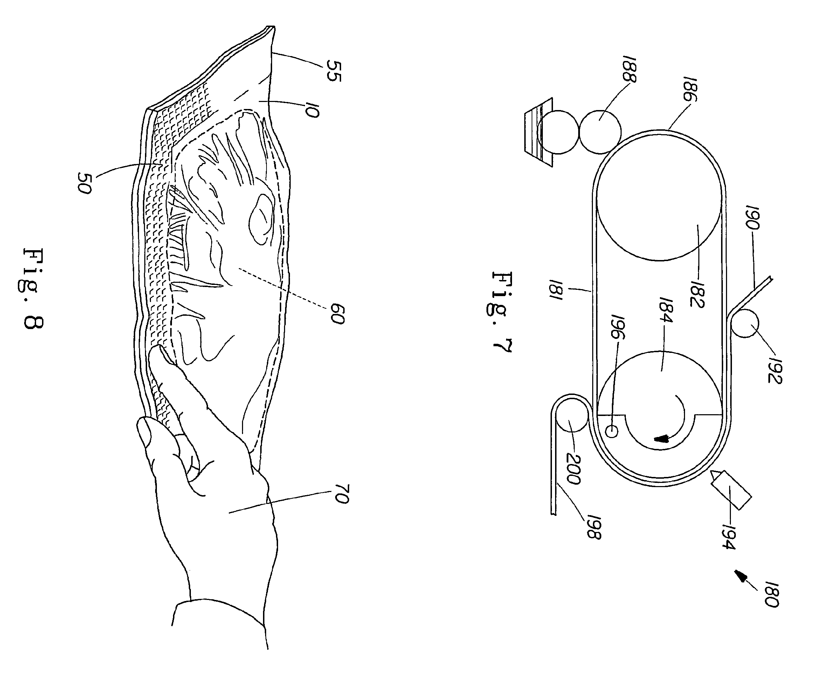

Figure 4 depicts a preferred forming screen or surface which could be utilized to form a corresponding three-dimensional storage wrap material 10 such as depicted by Fig. 2, whereas Figures 5 and 7 disclose a suitable method and apparatus for making the material 10, the method generally indicated as 30 (not shown). The method 30 is representative and may be modified or tailored to suit a particular size, composition, etc. of the resulting material 10. The method 30 also utilizes a forming surface 32, which is preferably a three-dimensional screen having recesses 34 and lands 36 between the recesses 34. Such a forming structure would constitute a female-type forming structure that, in use, would form corresponding male protrusions in the structure-contacting side of the formed material.

According to Figure 4, when a material 10 is thermoformed over a forming surface 32, protrusions 12 are preferably formed by drawing them into the recesses 34 with a vacuum when the material 10 is heated to a softening temperature, and then maintaining the protrusions 12 drawn into the recesses 34 while the material 10 cools to a solidification temperature. In this method, the lands 36 define the bases of the spaces 14 between the protrusions 12. The protrusions 12 are preferably formed with sidewalls 22 being as nearly as possible perpendicular to the original surface of the sheet material, but with some taper being typical. The outermost ends of the protrusions 12 may be domed or more truncated in shape so as to form frustums of the corresponding polygonal shape.

The storage wrap materials 10 of the present invention may be vacuum thermoformed, embossed, or hydroformed, or formed by other forming means commonly known in the art for permanently deforming thin materials.

Figure 4 shows a preferred forming screen 32 comprising interconnected lands 36 surrounding polygonal recesses 34. The lands 36 are preferably made of stainless steel and coated with a release agent. Most preferably, the screen 32 is made into a continuous forming screen or belt 181, as shown in Figure 7. Alternatively, the screen 32 could be utilized in flat plate-like form or formed into a rigid drum. Figure 5 depicts a partial cross-sectional view of the forming screen 32 taken at a location that depicts a cross-section through two consecutive lands. The lands 36 also have a dimension B that represents the land width, which is preferably constant as measured between substantially parallel adjacent land edges, and another dimension T which represents screen thickness.

Methods of production can influence the sidewall thickness profile such as in the use of a forming screen with essentially straight screen walls that define the forming screen hole. Such a process allows for substantially thinner sidewall thickness since the protrusion is freely drawn from the base perimeter into the forming screen recess to the point of contact with the internal backup screen. The internal backup screen's purpose is to prevent further drawing of the protrusion. This approach yields a more varied gauge profile within the sidewalls.

It has been discovered while reducing to practice the present invention that hot melt adhesives have different thermoforming properties than other adhesive compositions. The difference is that protrusions, which are formed when a hot melt adhesive has been applied to the forming surface, tend to exhibit more thinning in their sidewalls. It is believed that the hot melt adhesive cools and solidifies when contacting the metal forming surface and thereby prevents the sheet material in contact with the adhesive from being drawn into the recesses, so that uniform thickness valleys result. With other adhesive compositions, such as latex adhesive, less thinning of protrusion sidewalls occurs, presumably because some of the sheet material in contact with the adhesive on the lands or pin tops of the forming surface flows into the recesses during thermoforming.

Exemplary embodiments for embossing and applying an adhesive composition to web materials, such as those of the present invention, are described in detail in U.S. Patent No. 6,193,918, issued February 27, 2001 to McGuire and Bush, entitled "High Speed Embossing and Adhesive Printing Process and Apparatus" and in copending application S/N (P&G Case No. 8762), filed on even date herewith and entitled "High Speed Embossing and Adhesive Printing Process and Apparatus", both of which are incorporated herein by reference.

Figure 6 depicts an embossing and adhesive printing process and apparatus 210 according to the present invention. According to this embodiments, the apparatus for embossing and applying an adhesive composition to the sheet materials is composed fundamentally of first and second embossing rolls 350, 360, a plurality of adhesive metering application rolls 310-313, a web transfer roll 365, a pressure roll 370, a strip-off roll 380, and a S-wrap 390. The first and second embossing rolls 350, 360 have a complimentary or matched embossing pattern that interlocks to emboss the pattern onto a sheet material 420 passed therebetween. A roll with pockets and raised lands is referred to as the female embossing roll, while a roll with raised nubs and recessed lands is referred to as the male embossing roll. It is preferred that the first embossing roll 350 have a release surface disposed thereon.

As shown in Figure 6, an adhesive composition 400 (preferably a hot melt pressure-sensitive adhesive composition) is extruded onto the surface of the first adhesive application metering roll 310 via a slot die 300. The surface speed of the first adhesive application metering roll 310 is generally considerably slower than the nominal tangential line speed of the sheet material 420 to be embossed and coated. The remaining adjacent adhesive application metering rolls 311-313 then rotate progressively faster so that the adhesive application nip, station 250, is surface speed matched with the surface speed of the traversing sheet material 420. The adhesive composition 400 is then transferred from the final adhesive application metering roll 313 to the first embossing roll 350, located at station 250. The adhesive composition 400 travels on the surface of first embossing roll 350 to a second station (station 260), where the adhesive composition 400 is combined with the sheet material 420. The combined adhesive composition 400 and sheet material 420 then proceed to yet another station (station 270).

At this later station (station 270), the combined adhesive composition 400 and sheet material 420 are embossed by the first and second embossing rolls 350, 360 with the complimentary embossing pattern disposed thereon to form an adhesive composition coating (not shown) on the sheet material 420. This results in the embossing pattern being in register with the adhesive pattern of the first embossing roll 350. The adhesive composition coating, now adhered to the surface of the first embossing roll 350, next travels on the surface of the first embossing roll 350 to another station (station 280), where a pressure roll 370 applies pressure to the adhesive composition coating to form the embossed adhesive coated sheet material 410. The embossed adhesive coated sheet material 410, still adhered to the first embossing roll 350, next travels to still another station (station 290), where it is removed from the first embossing roll 350 via a strip-off roll 380. The finished embossed adhesive coated sheet material 410 then travels to the S-wrap 390 at station 430.

The adhesive composition 400 is preferably highly elastic in nature because a transition from a stationary slot die 300 to full tangential line speed can result in the adhesive composition 400 being extended. If the adhesive composition 400 is non-elastic, this action results in fracture, or in non-adhesion to the first metering roll 310. To reduce the necessary extension rate of the adhesive composition 400, it is applied first to a slow moving roll. Through a series of metering gaps (stations 220, 230 and 240) it is milled down to a very thin adhesive film and accelerated at the desired tangential line speed.

The first embossing roll 350 preferably includes a release coating applied to both the land surfaces and to the surfaces of the pockets or recesses therebetween. The release coating and the adhesive properties should be carefully balanced to provide the desired combination of adhesion and release. The coating must allow the very hot (typically 300-350°F (149-177°C)) adhesive composition to transfer to the first embossing roll 350 and yet allow the embossed adhesive coated sheet material 410 to release at the first embossing roll 350 temperature.

In one exemplary embodiment, the first embossing roll 350 is internally cooled to a temperature that facilitates release of the adhesive coated sheet material 410 from the embossing roll 350. The surface of the embossing roll 350 (between station 290 and station 250) should be heated by a heater 285 to improve adhesive transfer from the adhesive application roll 313 to the embossing roll 350. Suitable heaters include radiant, conductive, convective, and combinations thereof. Alternatively, heating the embossing roll 350 and then selectively cooling the embossed adhesive coated sheet material 410 can also achieve these results. Preferably, the embossed adhesive coated sheet material 410 is cooled (at station 290) to less than 180°F (82°C), more preferably less than 140°F (60°C), and most preferably, less than 100°F (38°C). In sum, a temperature differential should exist between the point of adhesive composition 400 pick-up (at station 250) and the point of embossed adhesive coated sheet material 410 removal from the first embossing roll 350 (at station 290). Preferably, the surface temperature of the first embossing roll 350 at station 290 is lower than the surface temperature of the first embossing roll 350 at station 250.

This described method and apparatus for embossing and adhesive application is exemplary only and those skilled in the art will recognize other techniques and apparatus suitable for manufacturing the sheet materials of the invention.

Figure 7 shows another exemplary embodiment of a suitable method and apparatus for making a material of the present invention, which is generally indicated as 180. The formed material is preferably transparent or translucent, so that it may be accurately positioned before being deformed. Transparency, however, introduces a new problem of determining on which side of the three-dimensional structure the adhesive composition is located, in order to know which side to place against a target surface. Adhesive side identification can be solved by placing indicia on the surface of the three dimensional structure, by coloring the adhesive a different tint than the three-dimensional structure, or by providing a laminated material structure of different tints, for example. In the case of labels, transparency may not be needed since material edges may be used for proper positioning.

Micro-texturing the material during forming may also be useful, such as in producing a distinction between one side of the material and the other side. Micro-texturing of the outermost surface features of the three dimensional structure may be achieved in the present invention, for example, by drawing the piece of material into forming screen recesses and against a micro-textured surface, such as a vacuum drum having tiny apertures therein.

For example, as shown in Figure 7, forming screen 181 is threaded over an idler pulley 182 and a driven vacuum roll 184. The forming screen 181 is preferably a 0.005 inch (0.013 cm) thick, 12.5 inch (31.8 cm) wide, 6 foot (183 cm) circumference stainless steel belt, having the desired protrusion pattern etched as recesses in the belt. Covering the outer surface of the vacuum roll 184 is a 195 mesh seamless nickel screen having a diameter of 8.63 inches (21.9 cm), which serves as a porous backing surface for the forming screen 181.

For producing a pressure sensitive adhesive containing material, an adhesive composition 186, preferably a hot melt adhesive composition, is coated onto the forming screen 181 by a substance applicator 188 while the forming screen 181 travels at about 20 feet (610 cm) per minute. A material 190, for example, a HDPE film web about 0.0005 inches (0.0013 cm) thick, is brought into contact with the adhesive coated forming screen at a material infeed idler roll 192. Hot air at approximately 600°F (316°C) and flowing at approximately 11.25 SCFM (0.32 cubic meters/minute) is directed radially at the material 190 by a hot air source 194 as the material passes over vacuum roll 184 and as vacuum is applied to forming screen 181 through vacuum roll 184 via fixed vacuum manifold 196 from a vacuum source (not shown). A vacuum of approximately 12 inches of mercury (40.6 kPa) is applied as the material is heated by hot air source 194. A formed, adhesive coated material 198 is stripped from forming screen 181 at stripping roll 200.

Stainless steel forming screen 181 is a fabricated, seamed continuous belt. It is fabricated in several steps. The recess pattern is preferably developed by a computer program according to the method described above and is preferably printed onto a transparency to provide a photomask for photoetching. The photomask is used to create etched and non-etched areas. The etched material is typically stainless steel, but it may also be brass, aluminum, copper, magnesium, and other materials including alloys. Methods of making metal screens by photoetching are described in more detail in U.S. Patents Nos. 4,342,314 to Radel and Thompson, 4,508,256 to Radel et al., and 4,509,908 to Mullane, Jr., all incorporated herein by reference.

Additionally, the recess pattern may be etched into photosensitive polymers instead of metals. Examples are described along with a methods of making polymer forming screens in U.S. Patents Nos. 4,514,345 to Johnson et al., 5,098,522 to Smurkoski et al., 4,528,239 to Trokhan, and 5,245,025 to Trokhan, all incorporated herein by reference.

Next, the forming screen is converted into a continuous belt by butt-welding the ends together using either laser or electron beam welding. This produces a nearly undetectable seam, which is needed to minimize disruptions in the recess pattern. The final step is coating the endless belt with a low critical surface tension (non-stick) coating, such as a Series 21000 proprietary release coating made by and applied by Plasma Coatings of TN, Inc., located in Memphis, TN. It is believed that this coating is primarily an organo-silicone epoxy. As applied to a stainless steel forming screen used in the methods of the present invention, this coating provides a critical surface tension of about 18 dynes/cm. Other materials which may prove suitable for providing reduced critical surface tension include paraffins, silicones, PTFE's, and the like. This coating allows the formed material to be removed from the belt without undue stretching or tearing.

A belt-forming screen is believed advantageous to a flat plate or a drum-forming screen because a belt enables screen patterns and pattern lengths to be changed more easily and larger patterns may be used without having massive rotating members. However, depending upon the desired quantity and dimensions of the material 10 to be formed it may be equally suitable to fabricate the forming structure as a flat plate or rigid drum, and/or other forming structures and methods known in the art.

Because the same common forming screen is used to transfer the adhesive to the material as is used to form the protrusions, the adhesive pattern is conveniently registered with the protrusions. In an exemplary embodiment, the top surface of forming screen 32 is continuous except for recesses 34; thus, the adhesive pattern is totally interconnected in this configuration. However, if a discontinuous pattern of adhesive were coated onto forming screen 32, a discontinuous adhesive pattern between protrusions would result.

In accordance with an exemplary method of manufacturing the storage wrap material 10, the three-dimensional protrusions are unitarily formed from the sheet of deformable material itself and are hollow structures with depressions in one side which preferably each have a size and three-dimensional shape corresponding substantially with the size and three-dimensional shape of their respective protrusion. However, it may also be desirable for some applications to utilize solid protrusions unitarily, integrally, or separately formed from (and applied to) the sheet material and which may or may not be deformable.

In general, the present invention is a storage wrap material that may take the form of a three-dimensional sheet material that is activated by applying a compressive force so that the structure collapses to expose an adhesive to contact with external surface(s). However, the scope of the invention also applies to storage wrap materials that are activatible by means other than compression. For example, the inventors have found that a tensile force applied to the same three-dimensional structure can cause it to plastically deform longitudinally and thereby contract in caliper or thickness to similarly expose or release adhesive. It is believed that under sufficient tension, the material between protrusions deforms in response to forces in the plane of the material and that protrusions are thereby elongated in the same direction. When the protrusions are elongated, they are reduced in height. With enough elongation the protrusions are reduced in height to where the adhesive compositions between them, in them, or both are exposed.

For a one inch (2.54 cm) wide strip of material 10, made from 0.0003 inch (0.0076 mm) thick HDPE and formed to have protrusions of 0.006 inches (0.152 mm) height and 0.030 inches (0.762 mm) diameter, spaced 0.045 inches (1.14 mm) apart, the tensile force found necessary to cause protrusions to expose a 0.001 inch (0.025 mm) thick coating of adhesive in the valleys between protrusions is approximately 0.80 pounds (0.36 kg) per inch (2.54 cm) of strip width.

A combination of compression and tensile forces may be applied to the material of the present invention in order to expose an adhesive composition from within the three-dimensional structure. Although in an exemplary embodiment of the present invention, the tensile force necessary to achieve sufficient deformation of said three-dimensional structure in order to expose the adhesive composition to an external surface is significantly greater than a compressive force to achieve the same result, a structure may be designed which is more easily deformed by a tensile force applied in a specific planar direction. For example, a structure may have parallel waves instead of protrusions and the waves may be easily flattened by stretching the structure perpendicular to the waves but in the plane of the waves. Tensile responsive structures and the principles behind them are disclosed in U.S. Patent No. 5,518,801, issued May 21, 1996 to Chappell et al., entitled "Web Materials Exhibiting Elastic-like Behavior", incorporated herein by reference.

In another example, heat could be applied to cause the same structure made of shrinkable film to reduce in thickness to similarly release or expose the adhesive composition.

As described herein, different adhesive compositions can be deposited on the opposing faces of the formed material. Multiple adhesive compositions can be located on the same face of the material either geometrically spaced from each other or commingled. Adhesive compositions can be partially layered. An example is a layer of adhesive adjacent to the material surface with a solid particulate adhered to the exposed side of the adhesive layer. In addition, it is contemplated that it may be desirable for certain applications to have protrusions extending outwardly from both sides of the formed material, such that both sides are active sides with deformable protrusions.

A pattern of protrusions can be superimposed either on a similar dimensional scale or on a different dimensional scale such as a single or multiple "microprotrusion" pattern located on the tops of other larger protrusions.

Additional details of the process of Figure 7, as well as additional details regarding three-dimensional materials described above may be found in the aforementioned and incorporated, U.S. Patent No. 5,871,607.

While under some circumstances it may be acceptable or desirable to design the storage wrap material so as to form a discontinuous bond pattern with itself or another target surface, such as by having an intermittent or discontinuous layer of adhesive on its active surface, it is presently preferred that the storage wrap material be designed so as to exhibit the ability to form a continuous seal or bond with itself and with any sufficiently continuous target surface.

Figures 8-10 depict representative applications of interest for the storage wrap material 10. More particularly, Figure 8 depicts storage wrap material 10 utilized independently to form a closed container for an item 60. A one-sided version of the storage wrap material 10 is preferably utilized such that only one side of the material is active, although a two-sided material could also be utilized. The material is wrapped or folded around the desired item 60 so as to leave a marginal edge extending outwardly beyond the maximum dimensions of the item 60. As depicted in Figure 8, the sheet of storage wrap material 10 has been folded over and around the item 60 by folding the material along a folded edge 55 and forming a fin-type seal 50 around the remaining perimeter, in this instance three sides, of the item 60. The storage wrap material 10 is bonded or adhered to itself in a face-to-face orientation wherein both active sides of the material are in contact with one another. Accordingly, when a user 70 activates the adhesive on at least one, and preferably both, of the overlying or overlapping portions of the material in the region of the fin seal 50, the overlying portions are firmly adhered together to complete the enclosure of the item 60. Alternatively, rather than folding a larger web of material upon itself to form an enclosure, two or more discrete smaller pieces of storage wrap material 10 may be utilized by wrapping them over the item 60 and sealing them to one another in face-to-face or face-to-back orientation.

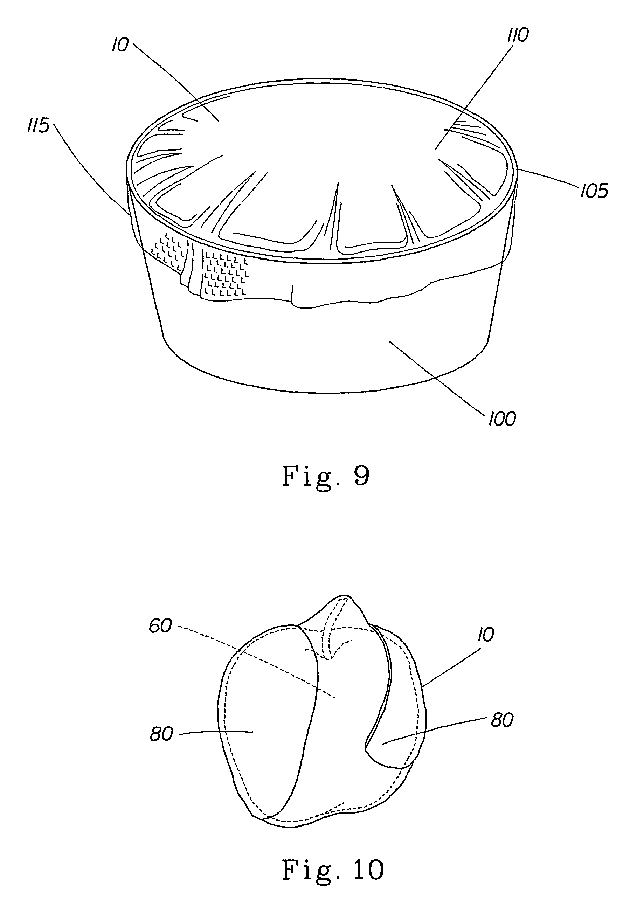

Figure 9 depicts another use of the storage wrap material 10 as the closure of a semi-enclosed, rigid or semi-rigid container 100. In the configuration of Figure 9, a combination container structure is thus illustrated wherein the storage wrap material is adhered to the rim portion 105 of the container which circumscribes the opening 110 to form a corresponding closure for the opening. The storage wrap material 10 forms an adequate barrier seal even if only applied to the surface of the rim 105 that is in the plane of the opening 110. As depicted in Figure 9, the storage wrap material 10 may also be applied so as to affect an additional seal over an additional area around the periphery of the rim 105 by bonding to the wall portion 115 of the container that extends in a direction substantially normal to the plane of the opening. Effective sealing may also be accomplished by bonding the storage wrap material only to the wall portion 115 of the container. Where such a closure completely encloses the contents (not shown) of the container 100, the contents are protected from the exterior environment outside the container and are also contained and protected from loss.

Containers such as container 100, which as shown has no protruding structures for cooperating with storage wrap 10, are frequently constructed of rigid or semi-rigid materials such as metal, glass, ceramic, plastic, or wood which have a comparatively smooth and uniform surface. Accordingly, storage wrap material 10 in accordance with the present invention activates to provide the desired level of adhesive force in combination with such non-conforming, rigid or semi-rigid surfaces so as to effectively form a closure for such containers. In addition, the storage wrap material may also be utilized in conjunction with openings in the plane of a wall of a container as well as openings that are formed at an end, etc. of a container substantially normal to adjacent wall surfaces. Such versatility is due to the adhesive properties of the storage wrap material which, unlike dead-fold wrap materials such as waxed paper or aluminum foil, enable the storage wrap materials of the present invention to form a suitable seal without the need to form a wrap angle around a rim, lip, or other structure adjacent the container opening.

Figure 10 depicts yet another common application for a storage wrap material 10, wherein a discrete web of storage wrap material 10 of the desired dimensions is wrapped continuously around an item 60 so as to enclose the item 60 completely. Edge portions 80 of the storage wrap material 10 which overlay the item and overlay other portions of the storage wrap material 10 are adhered to such other portions after activation such that they are secured in sealing relationship. This mode of item enclosure is particularly useful when the item has an irregular shape, such as the item 60 depicted in Figure 10. In this mode of deployment, the storage wrap material 10 is preferably oriented with the active side facing inwardly toward the item 60 such that the storage wrap may be activated over the item to provide additional security against shifting or loosening of the material. Alternatively, the storage wrap material 10 could be wrapped around the item with the active side lacing outwardly if adherence to the item is not desired, In either mode of deployment, the overlying portions 80 of the storage wrap material 10 will be activated and adhered to one another in face-to-back relation with one of the overlying portions being activated to provide the adhesive property and the other overlying portion being non-activated and hence a passive target surface.

If a two-sided activatible storage wrap material were utilized in the above example, then either or both of the superimposed face and back portions in the overlying portions 80 could be activated to effect a sealed region.

The improved storage wrap materials of the present invention may be employed to enclose a wide variety of items, both perishable and non-perishable. Such items may include single items within a given container/package system, as well as multiple items of the same or different types. Items enclosed may in fact be containers or packages that are themselves to be enclosed, such as a group of cartons wrapped together upon a pallet, for example. The items may be loosely grouped together within a single chamber within the container, or may be segregated within different chambers or compartments formed by the storage wrap material itself or other features of the container.

## Claims

1. A storage wrap material **characterized in that** it comprises a sheet material, preferably a polymeric film material, having a first active side and a second side, the first active side comprising a plurality of three-dimensional non-adherent protrusions extending outwardly from surrounding depressions and an adhesive composition coating on at least a portion of the depressions, wherein the adhesive composition coating has a thickness less than the height of the non-adherent protrusions and from about 0.00025 mm to about 0.0051 mm in thickness, preferably from about 0.00076 mm to about 0.0038 mm, and covers less than 75% of the first active side of the sheet material.

2. The storage wrap material according to claim 1, wherein the adhesive composition coating has a weight per unit area of about 0.1 g/m² to about 2g/m², preferably of about 0.3 g/m² to about 1.5g/m².

3. The storage wrap material according to claim 1 or claim 2, wherein the adhesive composition coating covers less than 55%, of the first active side of the sheet material.

4. The storage wrap material according to any one of claims 1 to 3, wherein the first active side is activatible by an externally applied force exerted upon the sheet material.

5. The storage wrap material according to claim 4, wherein the first active side is activatible by an externally applied compressive force exerted in a direction substantially normal to the sheet material.

6. The storage wrap material according to claim 4, wherein the first active side is activatible by an externally applied tensile force exerted in a direction substantially parallel to the sheet material.

7. The storage wrap material according to any one of claims 1 to 6, wherein the first active side is adapted to be selectively activated in discrete regions by a user, by being capable of forming discrete inactive and active regions on said side.

8. The storage wrap material according to any one of claims 1 to 7, wherein the first active side comprises an adhesion peel force after activation by a user which is greater than an adhesion peel force exhibited prior to activation by a user and which is sufficient to adhere to and form a barrier seal against a target surface, the seal exhibiting barrier properties at least as great as those of the storage wrap material and the target surface.

9. The storage wrap material according to any one of claims 1 to 8, wherein the second side comprises an active side.

10. The storage wrap material according to any one of previous claims 1 to 9, wherein the first active side is adapted to form a permanent bond with a target surface when activated.

11. The storage wrap material according to any one of claims 1 to 10, wherein the first active side is adapted to form a releasable bond with a target surface when activated.

12. A process for producing a storage wrap material **characterized in that** it comprises the steps of
(a) providing a first embossing roll having a first embossing pattern disposed thereon, wherein the first embossing roll is engaged with a second embossing roll, the second embossing roll having a second embossing pattern disposed thereon, the first embossing pattern and the second embossing pattern being complimentary;
(b) applying an adhesive composition to the first embossing roll;
(c) contacting a sheet material having a first active side and a second side with the first embossing roll after step (b), wherein the adhesive composition forms an adhesive composition coating on the sheet material in register with the first embossing pattern of the first embossing roll;
(d) passing the sheet material between the first embossing roll and the second embossing roll wherein the first embossing roll and the second embossing roll emboss the sheet material with the complimentary embossing pattern; wherein the adhesive composition coating has a thickness of from about 0.00025 mm to about 0.0051 mm in thickness, and covers less than 75% of the first active side of the sheet material; and
(e) removing the sheet material from the embossing roll.

13. The process according to claim 12, further comprising:
(i) applying the adhesive composition to a first adhesive application metering roll at an initial tangential speed prior to step (b);
(ii) accelerating the adhesive composition through a series of metering gaps between a plurality of adjacent adhesive rolls;
(iii) applying the adhesive composition to an adhesive application roll rotating at a tangential line speed which is higher than the initial tangential speed; and
(iv) transferring the adhesive composition from the adhesive application roll to the first embossing roll.

14. The process according to claim 13, wherein the first embossing roll at step (e) has a temperature which is lower than a temperature of the first embossing roll at step (b).

15. A process for producing a storage wrap material **characterized in that** it comprises:
(a) providing a first embossing roll with a first embossing pattern having lands and recesses disposed thereon, wherein the first embossing roll is engaged with a second embossing roll, the second embossing roll having a second embossing pattern disposed thereon, the first embossing pattern and the second embossing pattern being complimentary;
(b) passing a sheet material, having a first active side and a second side between the engagement of the first embossing roll and the second embossing roll wherein the first embossing roll and the second embossing roll emboss the sheet material with the complimentary embossing pattern; and
(c) applying an adhesive composition to the sheet material after step (b) wherein the adhesive composition is present on the sheet material at a level of from about 0.00025 mm to about 0.0051 mm in thickness, and covers less than 75% of the first active side of the sheet material.

## Patentansprüche

1. Lagerungshüllmaterial, **dadurch gekennzeichnet, dass** es ein Flächenmaterial, vorzugsweise ein Polymerfolienmaterial, mit einer ersten aktiven Seite und einer zweiten Seite umfasst, wobei die erste aktive Seite mehrere dreidimensionale nichthaftende Vorsprünge, die sich von den umgebenden Vertiefungen nach außen erstrecken, und eine Beschichtung aus einer Haftmittelzusammensetzung auf mindestens einem Abschnitt der Vertiefungen umfasst, wobei die Beschichtung aus einer Haftmittelzusammensetzung eine Dicke hat, die kleiner als die Höhe der nichthaftenden Vorsprünge ist und ungefähr 0,00025 mm bis ungefähr 0,0051 mm in der Dicke, vorzugsweise ungefähr 0,00076 mm bis ungefähr 0,0038 mm, beträgt und weniger als 75 % der ersten aktiven Seite des Flächenmaterials bedeckt.

2. Lagerungshüllmaterial nach Anspruch 1, wobei die Beschichtung aus einer Haftmittelzusammensetzung ein Gewicht pro Flächeneinheit von ungefähr 0,1g/m² bis ungefähr 2 g/m². vorzugsweise von ungefähr 0,3 g/m² bis ungefähr 1,5 g/m² hat.

3. Lagerungshüllmaterial nach Anspruch 1 oder Anspruch 2, wobei die Beschichtung aus einer Haftmittelzusammensetzung weniger als 55 % der ersten aktiven Seite des Flächenmaterials bedeckt.

4. Lagerungshüllmaterial nach einem der Anspruche 1 bis 3, wobei die erste aktive Seite durch eine extern auf das Flächenmaterial ausgeübte Kraft aktivierbar ist.

5. Lagerungshüllmaterial nach Anspruch 4, wobei die erste aktive Seite durch eine extern ausgeübte Druckkraft, die in einer Richtung im Wesentlichen senkrecht zu dem Flächenmaterial ausgeübt wird, aktivierbar ist.

6. Lagerungshüllmaterial nach Anspruch 4, wobei die erste aktive Seite durch eine extern ausgeübte Zugkraft, die in einer Richtung im Wesentlichen parallel zu dem Flächenmaterial ausgeübt wird, aktivierbar ist.

7. L.agerungshüllmaterial nach einem der Ansprüche 1 bis 6, wobei die erste aktive Seite so angepasst ist, dass sie in gesonderten Bereichen von einem Benutzer selektiv aktiviert werden kann, da sie in der Lage ist, gesonderte inaktive und aktive Bereiche auf der Seite zu bilden.

8. Lagerungshüllmaterial nach einem der Ansprüche 1 bis 7, wobei die erste aktive Seite nach der Aktivierung durch den Benutzer eine Adhäsionsschälkraft aufweist, die größer ist als eine Adhäsionsschälkraft vor der Aktivierung durch einen Benutzer und die ausreicht, um an einer Zieloberfläche zu haften und eine Sperrschiclatversiegelung gegen diese zu bilden, wobei die Versiegelung Sperreigenschaften aufweist, die mindestens so groß sind wie jene des Lagerungshüllmaterials und der Zieloberfläche.

9. Lagerungshüllmaterial nach einem der Ansprüche 1 bis 8, wobei die zweite Seite eine aktive Seite umfasst.

10. Lagerungshüllmaterial nach einem der vorstehenden Ansprüche 1 bis 9, wobei die erste aktive Seite so angepasst ist, dass sie eine permanente Binduzag mit einer Zieloberfläche bildet, wenn sie aktiviert ist.

11. Lagerungshüllmaterial nach einem der Ansprüche 1 bis 10, wobei die erste aktive Seite so angepasst ist, dass sie eine lösbare Bindung mit einer Zieloberfläche bildet, wenn sie aktiviert ist.

12. Verfahren zum Herstellen eines Lagerungshüllmaterials, **dadurch gekennzeichnet, dass** es die folgenden Schritte umfasst:
(a) Bereitstellen einer ersten Prägewalze mit einem darauf angeordneten ersten Prägemuster, wobei die erste Prägewalze mit einer zweiten Prägewalze zusammenwirkt, wobei die zweite Prägewalze ein darauf angeordnetes zweites Prägemuster aufweist, wobei das erste Prägemuster und das zweite Prägemuster komplementär sind;
(b) Auftragen einer Haftmittelzusammensetzung auf die erste Prägewalze;
(c) Inkontaktbringen eines Flächenmaterials mit einer ersten aktiven Seite und einer zweiten Seite mit einer ersten Prägewalze nach Schritt (b), wobei die Haftmittelzusammensetzung eine Beschichtung aus einer Haftmittelzusammensetzung auf dem Flächenmaterial entsprechend dem ersten Prägemuster der ersten Prägewalze bildet;
(d) Führen des Flächenmaterials zwischen der ersten Prägewalze und der zweiten Prägewalze, wobei die erste Prägewalze und die zweite Prägewalze das Flächenmaterial mit dem komplementären Prägemuster prägen;
wobei die Beschichtung aus einer Haftmittelzusammensetzung eine Dicke von ungefähr 0,00025 mm bis ungefähr 0,0051 mm in der Dicke hat und weniger als 75 % der ersten aktiven Seite des Flächenmaterials bedeckt; und
(e) Entfernen des Flächenmaterials von der Prägewalze.

13. Verfahren nach Anspruch 12, ferner umfassend:
(i) Auftragen der Haftmittelzusammensetzung auf eine erste Haftmittelauftrag- Dosierwalze mit einer Anfangs-Tangentialgeschwindigkeit vor Schnitt (b);
(ii) Beschleunigen der Haftmittelzusammensetzung durch eine Reihe von Dosierspalten zwischen mehreren benachbarten Haftmittelwalzen;
(iii) Auftragen der Haftmittelzusammensetzung auf eine Haftnuttelauftragwalze, die sich mit einer tangentialen Liniengeschwindigkeit dreht, die höher ist als die Anfangs-Tangentialgeschwindigkeit; und
(iv) Übertragen der Haftmittelzusammensetzung von der Haftmittelauftragwalze auf die erste Prägewalze.

14. Verfahren nach Anspruch 13, wobei die erste Prägewalze bei Schritt (e) eine Temperatur hat, die geringer ist als eine Temperatur der ersten Prägewalze bei Schritt (b).

15. Verfahren zum Herstellen eines Lagerungshüllmaterials, **dadurch gekennzeichnet, dass** es Folgendes umfasst:
(a) Bereitstellen einer ersten Prägewalze mit einem darauf angeordneten ersten Prägemuster mit Stegen und Vertiefungen, wobei die erste Prägewalze mit einer zweiten Prägewalze zusammenwirkt, wobei die zweite Prägewalze ein darauf angeordnetes zweites Prägemuster aufweist, wobei das erste Prägemuster und das zweite Prägemuster kompletnentär sind;
(b) Führen eines Flächenmaterials mit einer ersten aktiven Seite und einer zweiten Seite zwischen den Eingriff der ersten Prägewalze und der zweiten Prägewalze, wobei die erste Prägewalze und die zweite Prägewalze das Flächenmaterial mit dem komplementären Prägemuster prägen; und
(c) Auftragen einer Haftmittelzusammensetzung auf das Flächenmaterial nach Schritt (b)
wobei die Haftmittelzusammensetzung auf dem Flächenmaterial in einer Menge von ungefähr 0,00025 mm bis ungefähr 0,0051 mm in der Dicke vorhanden ist und Weniger als 75 % der ersten aktiven Seite des Flächenmaterials bedeckt.

## Revendications

1. Matériau de housse de stockage **caractérisé en ce qu'**il comprend un matériau en feuille, de préférence un matériau de type film polymère, ayant une première face active et une deuxième face, la première face active comprenant une pluralité de parties saillantes tridimensionnelles non adhérentes s'étendant vers l'extérieur à partir de creux voisins et un revêtement de composition adhésive sur au moins une partie des creux, dans lequel le revêtement de composition adhésive a une épaisseur inférieure à la hauteur des parties saillantes non adhérentes et d'environ 0,00025 mm à environ 0,0051 mm d'épaisseur, de préférence d'environ 0,00076 mm à environ 0,0038 mm, et couvre moins de 75 % de la première face active du matériau en feuille.

2. Matériau de housse de stockage selon la revendication 1, dans lequel le revêtement de composition adhésive a un poids par surface unitaire d'environ 0,1 g/m² à environ 2 g/m²_{'} de préférence d'environ 0,3 g/m² à environ 1,5 g/m².

3. Matériau de housse de stockage selon la revendication 1 ou la revendication 2, dans lequel le revêtement de composition adhésive couvre moins de 55 % de la première face active du matériau en feuille.

4. Matériau de housse de stockage selon l'une quelconque des revendications 1 à 3, dans lequel la première face active peut être activée par une contrainte appliquée de façon externe exercée sur le matériau en feuille.

5. Matériau de housse de stockage selon la revendication 4, dans lequel la première face active peut être activée par une force de compression appliquée de façon externe exercée dans une direction essentiellement normale au matériau en feuille.

6. Matériau de housse de stockage selon la revendication 4, dans lequel la première face active peut être activée par une force de tension appliquée de façon externe exercée dans une direction essentiellement parallèle au matériau en feuille.

7. Matériau de housse de stockage selon l'une quelconque des revendications 1 à 6, dans lequel la première face active est adaptée pour être sélectivement activée dans des régions distinctes par un utilisateur, en étant susceptible de former des régions distinctes inactives et actives sur ladite face.

8. Matériau de housse de stockage selon l'une quelconque des revendications 1 à 7, dans lequel la première face active comprend une force de pelage d'adhérence après activation par un utilisateur qui est supérieure à une force de pelage d'adhérence présentée avant activation par un utilisateur et qui est suffisante pour adhérer à et former un joint de barrière vis-à-vis d'une surface cible, le joint présentant des propriétés barrières au moins aussi grandes que celles du matériau de housse de stockage et de la surface cible.

9. Matériau de housse de stockage selon l'une quelconque des revendications 1 à 8, dans lequel la deuxième face comprend une face active.

10. Matériau de housse de stockage selon l'une quelconque des revendications 1 à 9, dans lequel la première face active est adaptée pour former une liaison permanente avec une surface cible lorsqu'elle est activée.

11. Matériau de housse de stockage selon l'une quelconque des revendications 1 à 10, dans lequel la première face active est adaptée pour former une liaison détachable avec une surface cible lorsqu'elle est activée.

12. Procédé pour fabriquer un matériau de housse de stockage, **caractérisé en ce qu'**il comprend les étapes consistant à :
(a) fournir un premier rouleau gaufreur ayant un premier motif de gaufrage disposé dessus, dans lequel le premier rouleau gaufreur est en prise avec un deuxième rouleau gaufreur, le deuxième rouleau gaufreur ayant un deuxième motif de gaufrage disposé dessus, le premier motif de gaufrage et le deuxième motif de gaufrage étant complémentaires ,
(b) appliquer une composition adhésive sur le premier rouleau gaufreur ;
(c) mettre en contact un matériau en feuille ayant une première face active et une deuxième face avec le premier rouleau gaufreur après l'étape (b), dans lequel la composition adhésive forme un revêtement de composition adhésive sur le matériau en feuille en alignement avec le premier motif de gaufrage du premier rouleau gaufreur ;
(d) faire passer le matériau en feuille entre le premier rouleau gaufreur et le deuxième rouleau gaufreur, dans lequel le premier rouleau gaufreur et le deuxième rouleau gaufreur gaufrent le matériau en feuille avec le motif de gaufrage complémentaire ;
dans lequel le revêtement de composition adhésive a une épaisseur allant d'environ 0,00025mm à environ 0,0051 mm d'épaisseur, et couvre moins de 75 % de la première face active du matériau en feuille ; et
(e) retirer le matériau en feuille du rouleau gaufreur.

13. Procédé selon la revendication 12, comprenant, en outre, :
(i) l'application de la composition adhésive sur un premier rouleau doseur d'application d'adhésif à une vitesse tangentielle initiale avant l'étape (b) ;
(ii) l'accélération de la composition adhésive à travers une série d'espacements de dosage entre une pluralité de rouleaux d'adhésif adjacents ;
(iii) l'application de la composition adhésive sur un rouleau d'application d'adhésif tournant à une vitesse tangentielle de production qui est plus élevée que la vitesse tangentielle initiale; et
(iv) le transfert de la composition adhésive du rouleau d'application d'adhésif vers le premier rouleau gaufreur.

14. Procédé selon la revendication 13, dans lequel le premier rouleau gaufreur à l'étape (e) a une température qui est plus basse qu'une température du premier rouleau gaufreur à l'étape (b).

15. Procédé pour fabriquer un matériau de housse de stockage, **caractérisé en ce qu'**il comprend :
(a) fournir un premier rouleau gaufreur avec un premier motif de gaufrage ayant des lands et des cavités disposés dessus, dans lequel le premier rouleau gaufreur est en prise avec un deuxième rouleau gaufreur, le deuxième rouleau gaufreur ayant un deuxième motif de gaufrage disposé dessus, le premier motif de gaufrage et le deuxième motif de gaufrage étant complémentaires ;
(b) faire passer un matériau en feuille ayant une première face active et une deuxième face entre l'engagement du premier rouleau gaufreur et le deuxième rouleau gaufreur, dans lequel le premier rouleau gaufreur et le deuxième rouleau gaufreur gaufrent le matériau en feuille avec le motif de gaufrage complémentaire ; et
(c) appliquer une composition adhésive sur le matériau en feuille après l'étape (b) dans lequel la composition adhésive est présente sur le matériau en feuille à un taux allant d'environ 0,00025 mm à environ 0,0051 mm d'épaisseur, et couvre moins de 75 % de la première face active du matériau en feuille.
